# EUROPEAN PATENT APPLICATION

(11) **EP 4 044 143 A1**
(43) Date of publication of application: **17.08.2022**
(21) Application number: 20883043.0
(22) Date of filing: 02.10.2020
(51) Int. Cl.: G08G 1/09, G08G 1/16

(54) **DRIVING ASSISTANCE SYSTEM**

(30) Priority: 30.10.2019 US 201962927868 P
(71) Applicant: Furukawa Electric Co., Ltd., Tokyo 100-8322 (JP)
(72) Inventor: NARUI Hirokazu, San Jose, California 95126 (US); FUNAKOSHI Kazuhiro, San Jose, California 95126 (US); YOKOUCHI Noriyuki, San Jose, California 95126 (US); MIURA Jun, Tokyo 100-8322 (JP)
(74) Representative: Winter, Brandl - Partnerschaft mbB
(86) International application number: PCT/JP2020/037511
(87) International publication number: WO 2021/085030

(57) **Abstract**

A driving support system uses information related to objects acquired by a sensor disposed at a location other than a target vehicle, and position information of the target vehicle to calculate information related to objects in a periphery of the target vehicle, and provides a warning, position information or distance information to an autonomous driving control unit or a driver of the target vehicle. It includes a road side information processing unit disposed at road side; a vehicle control unit which is disposed at the target vehicle; and a first position detection unit which is disposed on the target vehicle side or the road side, and detects position of the target vehicle. The road side information processing unit or the vehicle control unit calculates vehicle periphery information related to objects in the periphery of the target vehicle, using the information related to objects acquired from the sensor, and position of the target vehicle detected by the first position detection unit. The road side information processing unit sends at least one of the information related to objects and the vehicle periphery information to the target vehicle.

## Description

### TECHNICAL FIELD

The present disclosure relates to a driving support system.

### BACKGROUND ART

In recent years, as a support system for an autonomous vehicle, a system has been presented which provides the information required in autonomous driving from roads and parking lots via road-vehicle communication or vehicle-vehicle communication such as that represented in Patent Documents 1 and 2.

Patent Document 1 discloses a system which specifies the position of a vehicle by way of road side sensors, for a vehicle to which a GPS receiver is not built in, and provides information according to the position of this vehicle. In addition, Patent Document 1 also discloses providing information outside the range which can be measured by the sensors of the vehicle from the road side, by employing the information of other vehicles.

Patent Document 2 discloses a system which provides, to the vehicle, information combining the latest information in a parking lot and vehicle distance measurement data in an environment which dynamically changes such as a parking lot, and supports autonomous driving.

Patent Document 1: Japanese Unexamined Patent Application, Publication No. 2016-143092
Patent Document 2: Japanese Unexamined Patent Application, Publication No. 2019-109855

### DISCLOSURE OF THE INVENTION

### Problems to be Solved by the Invention

However, with the techniques proposed above, the vehicle cannot autonomous drive in the case of the sensors not being built in. Furthermore, in the case of sensors being built into the vehicle, since there can be a restriction in the height direction of the mounting position, tall vehicles such as trucks are obstacles, and thus it is not possible to penetrate these obstacles and detect obstacles which are farther. In addition, in the case of mounting a plurality of sensors to one vehicle, for example, sensors of a size which are relative large such as laser radar may harm the external appearance of the vehicle.

The present disclosure takes account of the above situation, and has an object of providing a driving support system capable of providing information related to objects suited to autonomous driving of a vehicle, even in a case of having only a simple sensor or having no sensors on the vehicle.

The present invention has an object of providing a driving support system which can acquire the information required for travel while suppressing an increase in cost.

### Means for Solving the Problems

According to a first aspect of the present invention, in a driving support system which uses information related to objects acquired by a sensor disposed at a location other than a target vehicle, and position information of the target vehicle to calculate information related to objects in a periphery of the target vehicle, and provides a warning, position information or information related to objects to an autonomous driving control unit or a driver of the target vehicle, the driving support system includes: a road side information processing unit disposed at road side; a vehicle control unit which is disposed at the target vehicle; and a first position detection unit which is disposed on the target vehicle side or the road side, and detects position of the target vehicle; in which the road side information processing unit or the vehicle control unit calculates vehicle periphery information related to objects in the periphery of the target vehicle, using the information related to objects acquired from the sensor, and position of the target vehicle detected by the first position detection unit, and in which the road side information processing unit sends at least one of the information related to objects and the vehicle periphery information to the target vehicle.

According to a second aspect of the present invention, the driving support system as described in the first aspect further includes: a road side communication unit disposed at the road side; and a vehicle communication unit which is disposed on the target vehicle side; in which the road side communication unit sends the vehicle periphery information to the vehicle communication unit.

According to a third aspect of the present invention, the driving support system as described in the first aspect further includes: a road side communication unit which is disposed at the road side; and a vehicle communication unit which is disposed on the target vehicle side; in which the road side communication unit sends information related to objects acquired from the sensor to the vehicle communication unit, and in which the vehicle control unit calculates the vehicle periphery information, using the information related to objects received from the vehicle communication unit and position of the target vehicle detected by the first position detection unit.

According to a fourth aspect of the present invention, in the driving support system as described in the first aspect, the road side information processing unit or the vehicle control unit calculates the vehicle periphery information by coordinate converting the information related to objects acquired from the sensor relative to the position of the target vehicle.

According to a fifth aspect of the present invention, in the driving support system as described in the first aspect, the road side information processing unit or the vehicle control unit creates a space model from the information related to objects acquired from the sensor, and calculates the vehicle periphery information from the space model and the position of the target vehicle.

According to a sixth aspect of the present invention, in the driving support system as described in any one of the first to fifth aspects, the first position detection unit is disposed at the vehicle side, and detects the position of the target vehicle using a positioning system which measures position using a signal from a satellite.

According to a seventh aspect of the present invention, in the driving support system as described in any one of the first to fifth aspects, the first position detection unit estimates the position of the target vehicle using the information related to objects acquired from the sensor.

According to an eighth aspect of the present invention, in the driving support system as described in any one of the first to seventh aspects, the position of the target vehicle is an absolute position or a relative position.

According to a ninth aspect of the present invention, the driving support system as described in any one of the first to eighth aspects further includes the sensor disposed at a vehicle, in which an integration unit which integrates information related to objects acquired from a plurality of the sensors is disposed at the road side, the vehicle periphery information is calculated using the information related to objects integrated by the integration unit, and the position of the target vehicle detected by the first position detection unit.

According to a tenth aspect of the present invention, the driving support system as described in any one of the first to eighth aspects further includes the sensor disposed to at least one vehicle and to the road side, in which an integration unit which integrates information related to objects acquired from a plurality of the sensors is disposed at the road side, and the vehicle periphery information is calculated using information related to objects integrated by the integration unit, and the position of the target vehicle detected by the first position detection unit.

According to an eleventh aspect of the present invention, in the driving support system as described in the tenth aspect, the information related to objects acquired from the sensor disposed at the road side is information differing from the information related to objects acquired from the sensor disposed to the at least one vehicle.

According to a twelfth aspect of the present invention, in the driving support system as described in any one of the ninth to eleventh aspects, the target vehicle is included in the vehicle.

According to a thirteenth aspect of the present invention, in the driving support system as described in any one of the ninth to twelfth aspects, the vehicle to which the sensor is disposed includes a first setting unit which sets whether or not to provide information related to objects acquired from its own sensor to the integration unit.

According to a fourteenth aspect of the present invention, in the driving support system as described in any one of the first to eighth aspects, at least two of the sensors, and an integration unit which integrates information related to objects acquired from the sensors are disposed at the roadside, and the vehicle periphery information is calculated using the information related to objects integrated by the integration unit, and the position of the target vehicle detected by the first position detection unit.

According to a fifteenth aspect of the present invention, in the driving support system as described in any one of the first to fourteenth aspects, the target vehicle includes a second setting unit which sets whether or not to receive provision of information related to objects from outside.

According to a sixteenth aspect of the present invention, the driving support system as described in any one of the ninth to fourteenth aspects further includes a communication terminal device which includes a second position detection unit that detects position, in which the communication terminal device sends position information detected by the second position detection unit to the integration unit.

According to a seventeenth aspect of the present invention, in the driving support system as described in the sixteenth aspect, the communication terminal device includes the sensor, and sends information related to objects detected by this sensor to the integration unit.

### Effects of the Invention

According to the present disclosure, it is possible to acquire the information required for travel while suppressing an increase in cost.

### BRIEF DESCRIPTION OF THE DRAWINGS

FIG. 1 is a block diagram showing a configuration example of a driving support system of a first embodiment;
FIG. 2 is a sequence diagram showing a processing sequence of the driving support system of a first embodiment;
FIG. 3 is a block diagram showing a configuration example of the driving support system of a second embodiment;
FIG. 4 is a sequence diagram showing a processing sequence of a driving support system of a second embodiment;
FIG. 5 is a block diagram showing a configuration example of a driving support system of a third embodiment;
FIG. 6 is a sequence diagram showing a processing sequence of a driving support system of a third embodiment;
FIG. 7 is a schematic drawing of a driving support system according to the embodiment;
FIG. 8 is a block diagram showing a configuration example of a driving support system of a fourth embodiment;
FIG. 9 is a sequence diagram showing a processing sequence of a driving support system of a fourth embodiment;
FIG. 10 is a block diagram showing a configuration example of a driving support system of a fifth embodiment;
FIG. 11 is a sequence diagram showing a processing sequence of a driving support system of a fifth embodiment;
FIG. 12 is a block diagram showing a configuration example of a driving support system of a sixth embodiment;
FIG. 13 is a block diagram showing a configuration example of a vehicle which is a target according to a sixth embodiment;
FIG. 14 is a block diagram showing a configuration example of a driving support system of a seventh embodiment;
FIG. 15 is a sequence diagram showing a processing sequence of a driving support system of a seventh embodiment;
FIG. 16 is a block diagram showing a configuration example of a communication terminal device of an eighth embodiment; and
FIG. 17 is a schematic diagram of a driving support system according to the embodiment.

### PREFERRED MODE FOR CARRYING OUT THE INVENTION

Next, various embodiments will be explained.

### (First Embodiment)

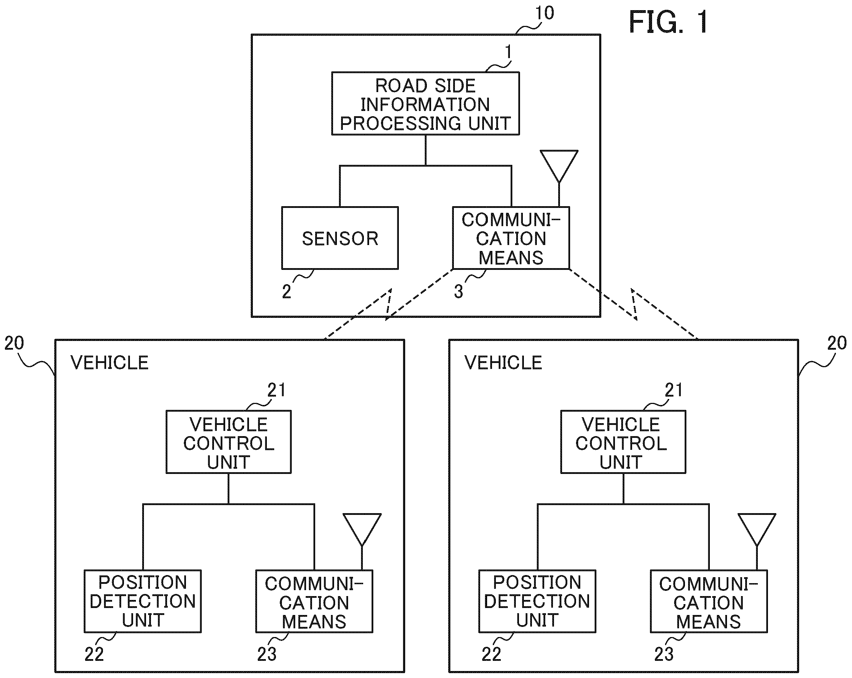

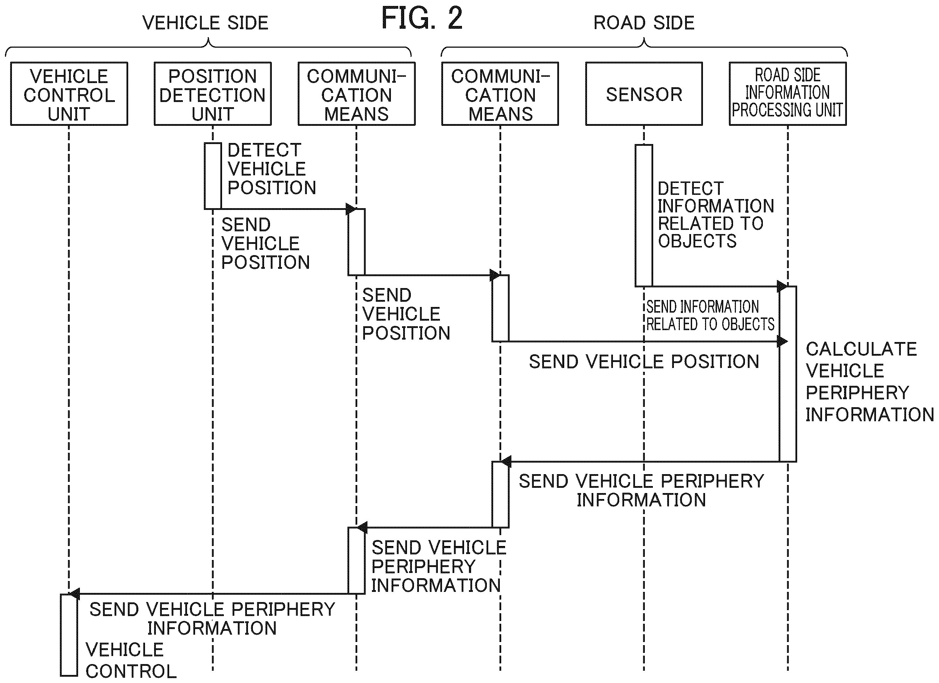

A first embodiment will be explained using FIGS. 1 and 2. FIG. 1 is a block diagram showing a configuration example of a driving support system according to the first embodiment. The driving support system is a system which uses information related to objects acquired by a sensor arranged outside of the target vehicle, and position information of the target vehicle, calculates information related objects in the vicinity of the target vehicle, and offers an autonomous driving control unit of the target vehicle, a warning to a driver, positional information or information related to objects.

The driving support system includes: a road side information processing unit 1 arranged on the road side; a vehicle control unit 21 arranged at a target vehicle, and a first position detection unit which is arranged on the target vehicle side or at the road side, and detects the position of the target vehicle. The road side information processing unit 1 or the vehicle control unit 21 calculates the vehicle periphery information related to objects in the vicinity of the target vehicle, using information related to the objects acquired by a sensor 2, and information of the target vehicle detected by the first position detection unit. The road side information processing unit 1 sends, to the target vehicle, at least one of the information related to objects and the vehicle periphery information. It should be noted that, although the sensor is explained as being one, two or more placed at the road side hereinafter, it is not to be limited to this configuration. In addition, the first position detection unit is explained as being arranged at the vehicle as the position detection unit 22; however, it is not limited to this configuration. In addition, "target vehicle" refers to the vehicle to which at least one of information related to objects and vehicle periphery information is sent from the road side. In addition, the vehicle to which information is not sent from the road side is simply called "vehicle".

The specific configuration will be explained hereinafter. Road side 10 is equipped with the roadside information processing unit 1 for processing information, one, two or more sensors 2 and a communication means 3 which performs wireless communication with a plurality of vehicles. The vehicle side is equipped with a vehicle control unit that controls the vehicle 20, the first position detection unit that detects the position of the vehicle and a communication means for communicating with the road side. It should be noted that, although FIG. 1 shows one sensor 2, it is not limited to this configuration, and two or more sensors 2 may be configured.

As one example, FIG. 2 shows the series of sequences of the present embodiment. First, the position detection unit on the vehicle side detects the position of the vehicle, and using the communication means, wirelessly communicates to the road side. Next, the vehicle periphery information in the road side information processing unit is calculated using the position of the vehicle received at the road side, and the information related to objects detected by one, two or more sensors on the road side. The calculated vehicle periphery information is wirelessly communicated from the road side to the vehicle side using the communication means. Using the vehicle periphery information received on the vehicle side, the vehicle control unit performs control of the vehicle.

The sensor is equipment which acquires information related to objects (information such as position, speed, angle of the objects), and is a millimeter-wave radar, laser radar, ultrasonic radar, camera or the like, for example. As the camera, it is possible to use any of a monocular camera and stereo camera.

The position detection unit 22 is arranged on the vehicle side, and detects the position of the target vehicle using a positioning system which measures the position using signals from satellites. For example, the position detect unit 22 is a GPS receiver.

For wireless communication, for example, communication is performed following a predetermined communication protocol based on IEEE802.11p. As the frequency used in wireless communication, a frequency of the band 5.9 GHz, and 700 MHz can be exemplified.

In addition, the road side information processing unit 1 or vehicle control unit 21 calculates the vehicle periphery information by coordinate converting the information related to objects acquired from the sensor 2 to the position of the target vehicle. Hereinafter, a configuration which calculates the vehicle periphery information by the road side information processing unit 1 will be specifically explained. The road side information processing unit 1 converts the information related to objects detected by the sensor 2 into Cartesian coordinates, and synthesizes information related to objects detected by another sensor on Cartesian coordinates.

In addition, the road side information processing unit 1 or vehicle control unit 21 may be a configuration which creates a space model from the information related to objects acquired from the sensor 2, and calculates the vehicle periphery information from the space model and the position of the target vehicle. Hereinafter, a configuration calculating the vehicle periphery information by the road side information processing unit 1 will be specifically explained. The road side information processing unit 1 performs three-dimensional modeling upon synthesizing the information related to objects. Each piece of information related to objects synthesized, for example, is information including distances between a sensor and another vehicle in the periphery, pedestrians, obstacles, buildings, etc. with the center of the coordinates as each sensor, for example.

Next, using the information related to objects synthesized and the vehicle position, coordinate conversion is done so as to become information related to objects centered on the vehicle position, to obtain the vehicle periphery information. Vehicle periphery information, for example, is information including the distance between its own vehicle and another vehicle in the periphery, pedestrians, obstacles, buildings, etc., with the center of the coordinates as its own vehicle.

Regarding the processing of the road side information processing unit, a part or the entirety of the processing may be performed by the vehicle control unit. In this case, the road side information processing unit compresses data without increasing the processing on the information related to objects, and wirelessly communicates to the vehicle side.

### (Second Embodiment)

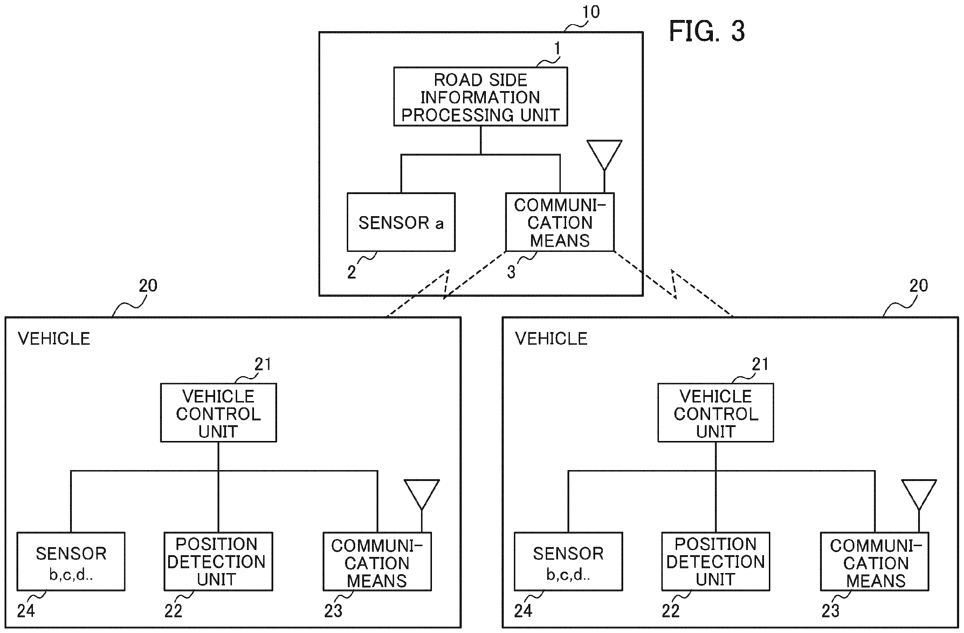

A second embodiment will be explained using FIG. 3. Relative to the form of the first embodiment, the second embodiment is a form in which a sensor is also provided to the vehicle side. The driving support system includes a road side communication unit arranged at the road side (hereinafter explained as communication means 3) and a vehicle communication unit arranged at the target vehicle side (hereinafter, explained as communication means 23). The communication means 3 communicates the vehicle periphery information to the communication means 23.

More specifically, the sensor 24 mounted to the vehicle side, for example, is a millimeter-wave radar, ultrasonic radar or camera, and the sensor mounted to the road side is a laser radar, for example. It should be noted that, for the sensor 2, FIG. 3 illustrates an aspect configured by one sensor a; however, it is not limited to this configuration, and may be configured by two or more. In addition, the sensor 24, FIG. 3 shows an aspect configured by three sensors b, c, d; however, it is not limited to this configuration, and may be configured by any number of sensors so long as being one or more.

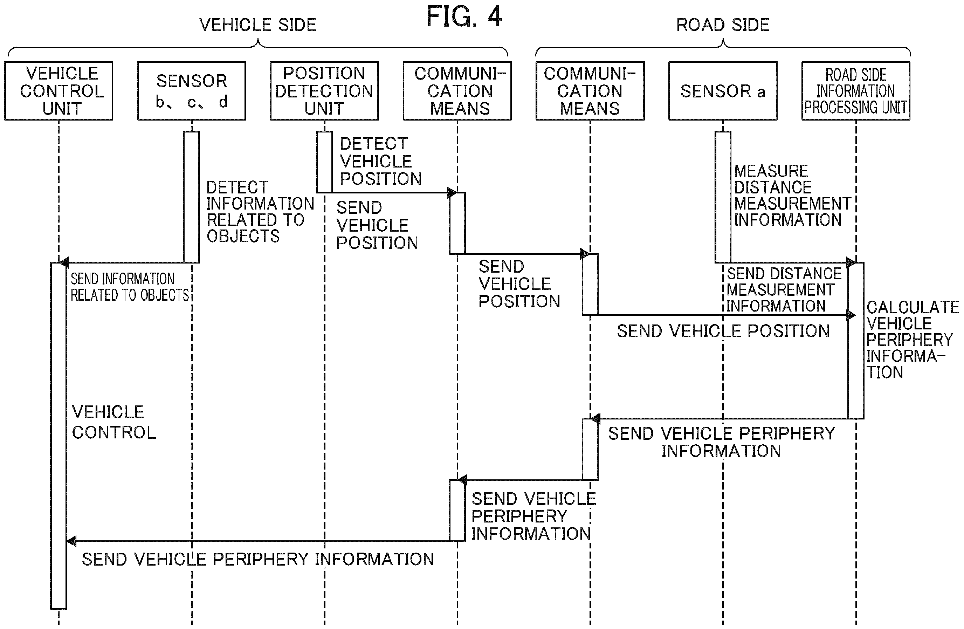

As one example, FIG. 4 shows the series of sequences of the present embodiment. First, the position detection unit on the vehicle side detects the position of the vehicle, and wirelessly communicates to the road side using the communication means. Next, using the position of the vehicle received on the road side and the information related to objects detected by one, two or more sensors on the road side, it calculates the vehicle periphery information in the road side information processing unit. The calculated vehicle periphery information is wirelessly communicated to the vehicle side from the road side using the communication means. The vehicle control unit performs control of the vehicle using vehicle periphery information received on the vehicle side and information related to objects detected by a sensor on the vehicle side. The sensor, wireless communication and road side information processing unit are similar to the first embodiment.

### (Third Embodiment)

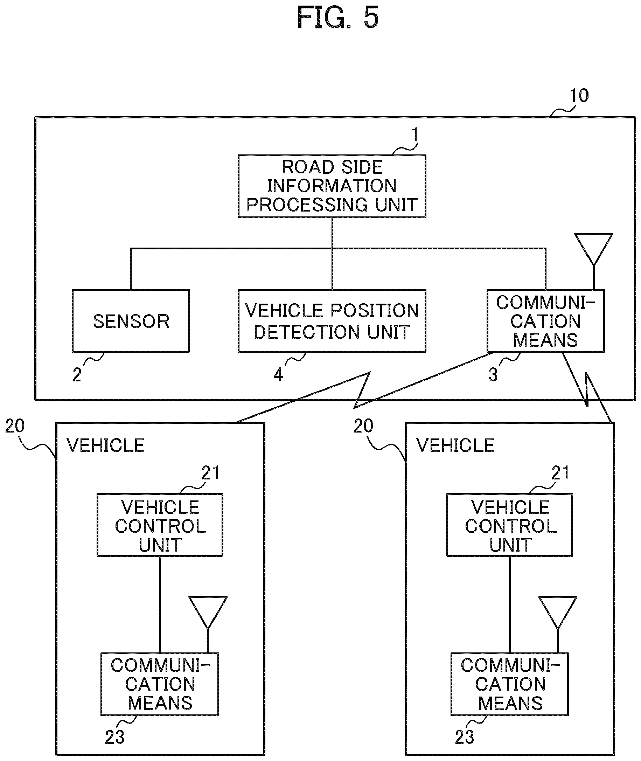

A third embodiment will be explained using FIG. 5. Relative to the form of the first embodiment, the third embodiment is a form in which there is no position detection unit on the vehicle side, and the vehicle position detection unit is provided on the road side.

The driving support system includes: the road side communication unit arranged at the roadside (hereinafter explained as communication means 3); and the vehicle communication unit arranged at the target vehicle side (hereinafter explained as communication means 23). The communication means 3 sends information related to objects acquired by the sensor 2 to the communication means 23. The vehicle control unit 21 calculates the vehicle periphery information, using the information related to object received by the communication means 23, and the position of the target vehicle detected by the first position detection unit (hereinafter explained as vehicle position detection unit 4).

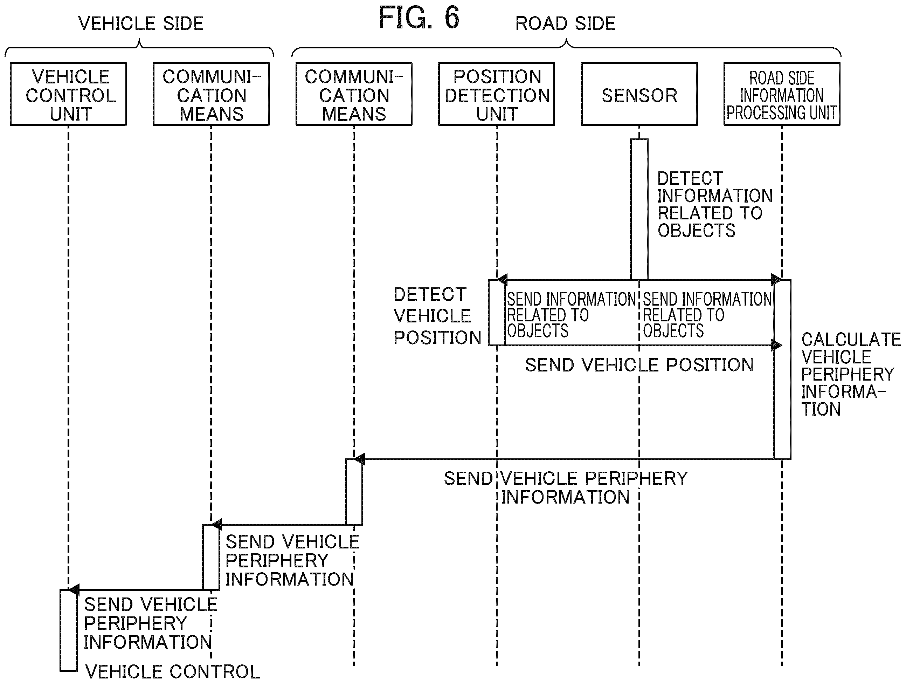

The present embodiment assumes a place where GPS does not function within an indoor parking garage. As an example, FIG. 6 shows the series of sequences of the present embodiment. First, the vehicle position detection unit 4 on the roadside detects the vehicle position using information related to objects detected by one, two or more sensors on the road side, and then sends to the road side information processing unit 1 The road side information processing unit 1 calculates the vehicle periphery information using information related to objects detected by the sensor 2 and the vehicle position. The calculated vehicle periphery information is wirelessly communicated from the road side to the vehicle side, using the communication means. The vehicle control unit performs control of the vehicle using the vehicle periphery information received on the vehicle side. The sensor, wireless communication and processing by the road side information processing unit are similar to the first embodiment.

The vehicle position detection unit 4 estimates the position of the target vehicle using the information related to objects acquired by the sensor 2. For example, the vehicle position detection unit 4 specifies the position of the target vehicle, based on the information related to objects acquired by the sensor 2. The position of the target vehicle specified herein is a relative position based on the sensor 2 (origin). The vehicle position detection unit 4 estimates the absolute position (information of latitude and longitude) of the target vehicle, using the position information of itself set in advance (information of latitude and longitude).

In addition, the position of the target vehicle is absolute position or relative position. Absolute position refers to the position indicated by the latitude and longitude by the position of the target vehicle. Relative position refers to the position at which the position of the target vehicle is indicated, based on the position of the road side or position of another vehicle.

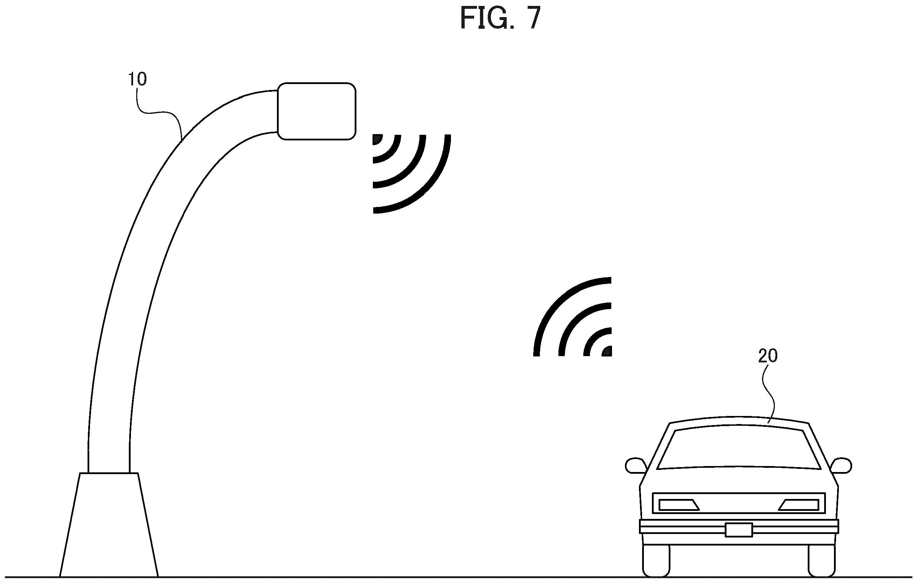

FIG. 7 is a schematic diagram of the driving support system according to the first to third embodiments. An aspect of the road side 10 and vehicle 2 which is the target performing communication is shown.

### (Fourth Embodiment)

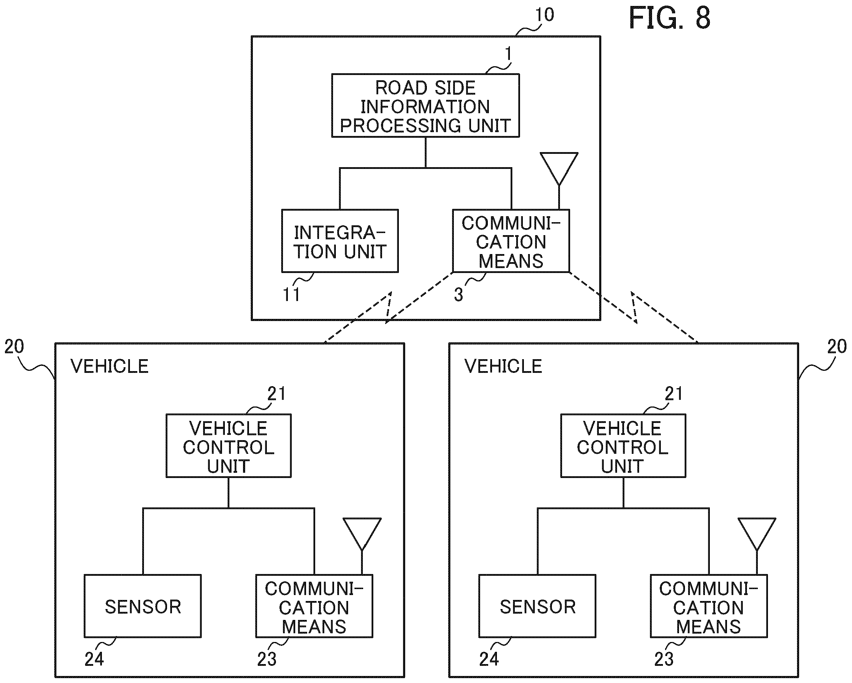

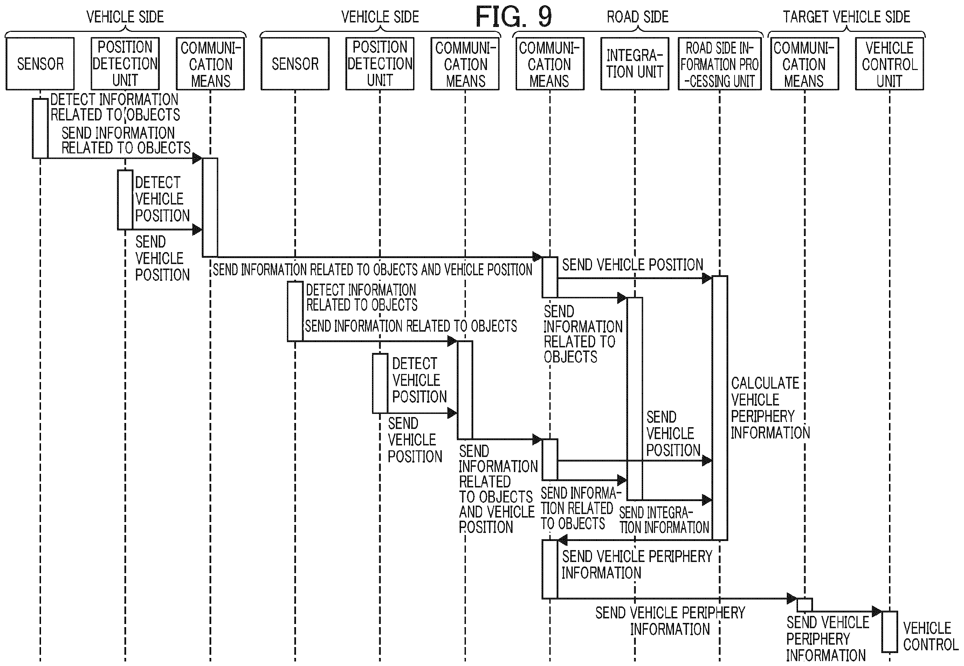

A fourth embodiment will be explained using FIGS. 8 and 9. FIG. 8 is a block diagram showing a configuration example of the driving support system according to the fourth embodiment.

The driving support system further has a sensor 24 arranged at the vehicle. An integration unit 11 which integrates information related to objects acquired by a plurality of sensors 24 is arranged at the road side, and the vehicle periphery information is a configuration calculated using the information related to objects integrated by the integration unit 11, and the position of the target vehicle detected by the first position detection unit.

It should be noted that FIG. 8 shows two vehicles; however, it is not limited to this configuration, and may be configured by three or more. vehicles.

In addition, a configuration can also be considered in which the target vehicle is not included among vehicles equipped with the sensor 2 and sending information related to objects to the road side. In the case of this configuration, the road side integrates the information related to objects acquired by the sensor 2 of another vehicle by way of the integration unit 1, and sends the integrated information to the target vehicle. The target vehicle calculates the vehicle periphery information using the information related to objects which was sent from the road side, and position of this vehicle, and performs control of the vehicle by the vehicle control unit using the calculated vehicle periphery information.

It should be noted that the road side may calculate the vehicle periphery information using the information related to objects integrated by the integration unit 11, and the position of the target vehicle, and send the calculated vehicle periphery information to the target vehicle.

It should be noted that "integrate information related to objects acquired by a plurality of sensors" can include integrating information related to the position at which each object exists, speed, type, etc. acquired form the plurality of sensors into one set of map information. In addition, for one object, it can include integrating information related to the position at which this object exists, speed, type, etc. obtained from the plurality of sensors, and establishing as information associated with each other.

As an example, FIG. 9 shows the series of sequences of the present embodiment. It should be noted that the vehicle providing information related to objects (hereinafter simply called "vehicle") is explained as a configuration including a sensor and position detection unit; however, it is not limited to this configuration. In addition, the target vehicle is explained as a configuration not including a sensor and vehicle position detection unit; however, it is not limited to this configuration.

Each vehicle detects the position of its own vehicle by the position detection unit, and detects the information related to objects by the sensor. Each vehicle sends the vehicle position and the information related to objects to the road side. The road side integrates the information related to objects sent from the vehicle and generates integrated information. In addition, the road side calculates the position of the target vehicle, based on the vehicle position sent from the vehicle. The road side calculates the vehicle periphery information, based on the integrated information and the position of the target vehicle. The road side sends the calculated vehicle periphery information to the target vehicle. The target vehicle performs control of the vehicle from the vehicle periphery information sent from the road side.

It should be noted that the target vehicle may be a configuration which includes the vehicle position detection unit that detects the position of its own vehicle. In the case of such a configuration, the road side may not necessarily collect information of the vehicle position from vehicles other than the target vehicle, and calculate the position of the target vehicle.

By configuring in this way, the target vehicle, even without including the sensor by itself, can perform control of the vehicle by the vehicle periphery information sent from the road side; therefore, it is possible to acquire information required in traveling, while suppressing an increase in cost.

### (Fifth Embodiment)

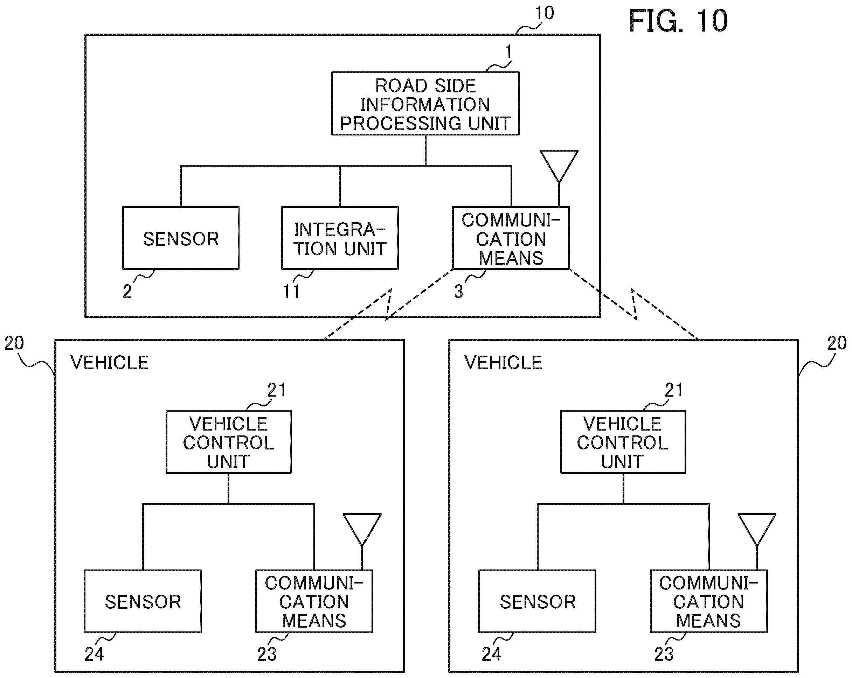

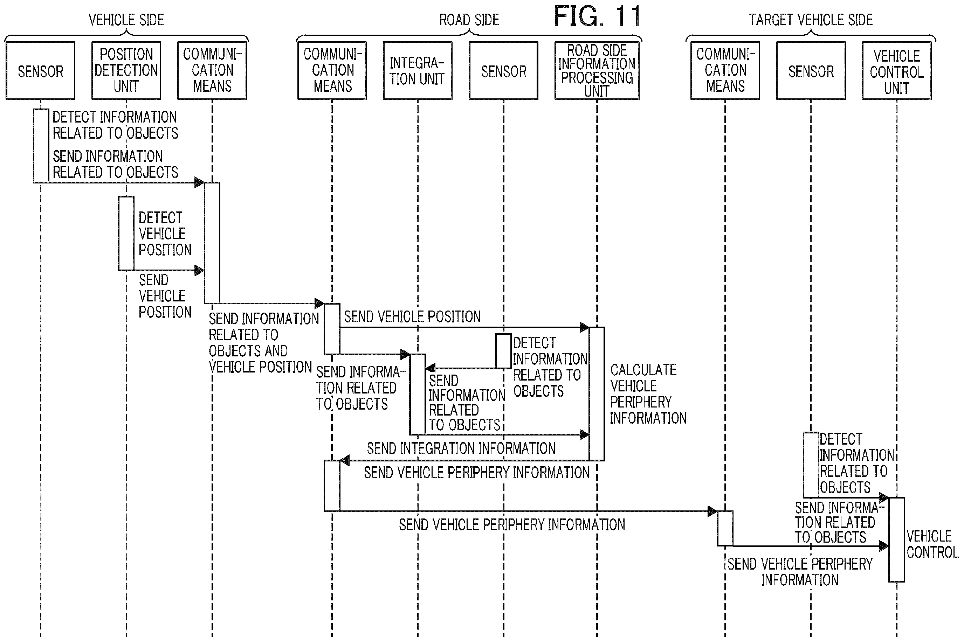

A fifth embodiment will be explained using FIGS. 10 and 11. FIG. 10 is a block diagram showing a configuration example of the driving support system according to the fifth embodiment.

The driving support system has at least one vehicle and sensors arranged at the road side. The integration unit which integrates information related to objects acquired from the plurality of sensors is arranged at the road side. The vehicle periphery information is calculated using the information related to objects integrated by the integration unit, and the position of the target vehicle detected by the first position detection unit. In addition, the information related to objects acquired by the sensor arranged at the roadside is information differing from the information related to objects acquired by the sensor arranged to at least one vehicle. It should be noted that the fifth embodiment will be explained as a configuration in which the target vehicle is included among the vehicles; however, it is not limited to this configuration.

For example, the sensor of the vehicle detects the information related to objects of short-mid range (for example, distance of range of 20 m from sensor of vehicle). For example, the sensor of the road side detects information related to objects of far distance (for example, distance of range of 100 m from the sensor of road side). By the integration unit integrating this information, it is possible to calculate the vehicle periphery information of a wide range from short distance to long distance, in the target vehicle.

In addition, the sensor of the road side is arranged at a position higher than the sensor of the vehicle. By integrating the information related to objects detected by the sensor of road side, and the information related to objects detected by the sensor of the vehicle, it is possible to compensate the information of a location which is a dead spot and cannot be detected from the sensor of the vehicle, with information related to objects detected by the sensor of road side.

In addition, the sensor of the road side may be a configuration having functions of high distance resolution and angular resolution with a object, compared to the sensor of the vehicle. In the case of such a configuration, At a location where the target vehicle cannot communicate with the road side, information related to objects detected by its own sensors is used; however, at locations where communication with the road side is possible, the information related to objects having high distance resolution and angular resolution detected by sensors of the road side can also be used.

Next, as one example, FIG. 11 shows the series of sequences of the present embodiment. It should be noted that the vehicle providing information related to objects (hereinafter simply called "vehicle") is explained hereinafter as a configuration including a sensor and position detection unit; however, it is not limited to this configuration. In addition, the target vehicle is explained as a configuration including a sensor; however, it is not limited to this configuration.

The vehicle detects the position of its own vehicle by the position detection unit, and detects information related to objects by a sensor. The vehicle sends the vehicle position and the information related to objects to the road side. The road side integrates information related to objects detected by the sensor of itself, and information related to objects which was sent from the vehicle, thereby generating integrated information. In addition, the road side calculates the position of the target vehicle, based on the vehicle position sent from the vehicle. The road side calculates the vehicle periphery information, based on the integrated information and the position of the target vehicle. The road side sends the calculated vehicle periphery information to the target vehicle. The target vehicle performs control of the vehicle using the information related to objects detected by its own sensor, and the vehicle periphery information sent from the road side.

It should be noted that the target vehicle may be a configured including the vehicle position detection unit which detects the position of its own vehicle. In the case of such a configuration, the road side may not necessarily collect information of the vehicle position from vehicles other than the target vehicle, and calculate the position of the target vehicle.

By configuring in this way, since it is possible to perform control of the vehicle using vehicle periphery information sent from the road side, even without the target vehicle including expensive sensors, it is possible to acquire the information required in traveling while suppressing an increase in cost.

### (Sixth Embodiment)

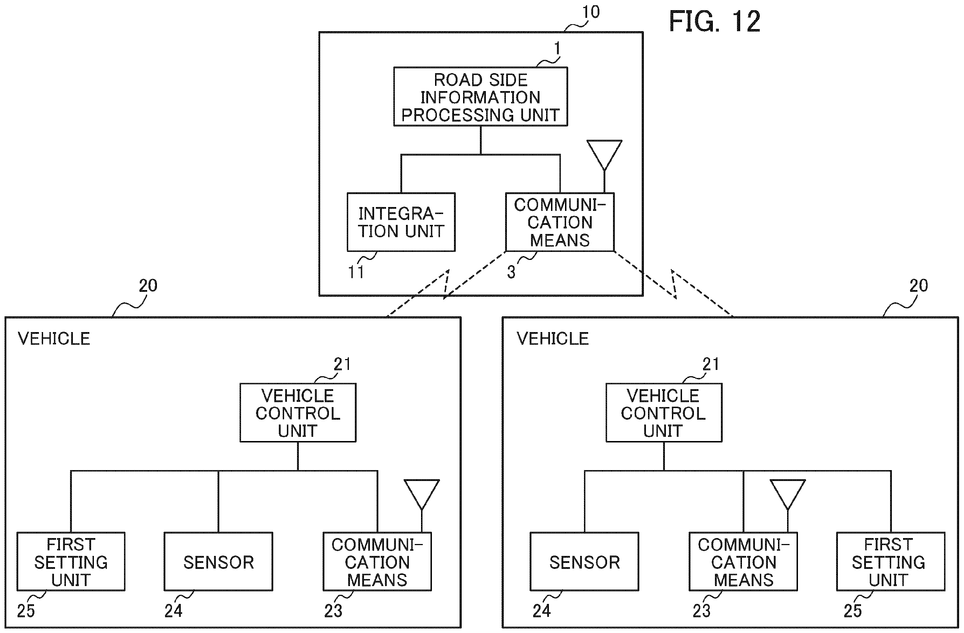

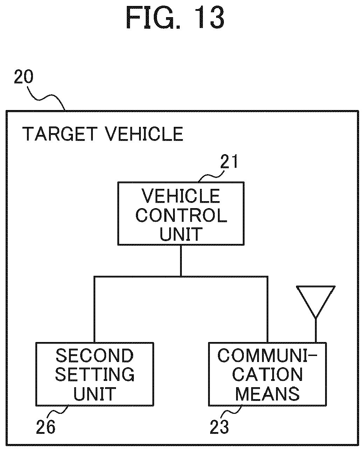

A sixth embodiment will be explained using FIGS. 12 and 13. FIG. 12 is a block diagram showing a configuration example of the driving support system according to the sixth embodiment. FIG. 13 is a block diagram showing a configuration example of a target vehicle according to the sixth embodiment.

With the driving support system, the vehicle to which the sensor is arranged includes a first setting unit 25 which sets whether or not to provide information related to objects acquired by its own sensor 24 to the integration unit 11. FIG. 12 shows an example in which there are two vehicles; however, it is not limited to this configuration.

In response to an operation by the user, in the case of the first setting unit 25 becoming the setting of ON (setting permitting the provision of information related to objects), the information related to objects detected by the sensor 24 is sent to the road side via the communication means 23. The road side sends the information related to objects received by the communication means 3 to the integration unit 11. The integration unit 11 integrates the information related to a plurality of objects, and generates integrated information. It should be noted that in the case of the first setting unit 25 becoming the setting of OFF (setting not permitting provision of information related to objects), the information related to objects detected by the sensor 24 is not sent to the road side.

In addition, the target vehicle may be a configuration including a second setting unit 26 which sets whether or not to receive the provision of information related to objects from outside.

In response to an operation by the user, in the case of the second setting unit 26 becoming the setting of ON (setting accepting the provision of information related to objects), for example, the vehicle control unit 21 sends a request for acquiring information related to objects to the road side. The road side sends information related to objects (may be vehicle periphery information) to the target vehicle, in response to a request sent from the target vehicle. It should be noted that, in the case of the second setting unit 26 becoming the setting of OFF (setting not to accept provision of information related to objects), the request for acquiring information related to objects is not sent to the road side.

In addition, it may be a configuration in which compensation (money, points of various services, etc.) is paid as an information providing fee, to the user providing the information related to objects. In addition, it may be a configuration which collects compensation as an information providing fee, relative to the user receiving the provision of information related to objects. According to such a configuration, it is possible to construct a new business such that trades information related to objects.

### (Seventh Embodiment)

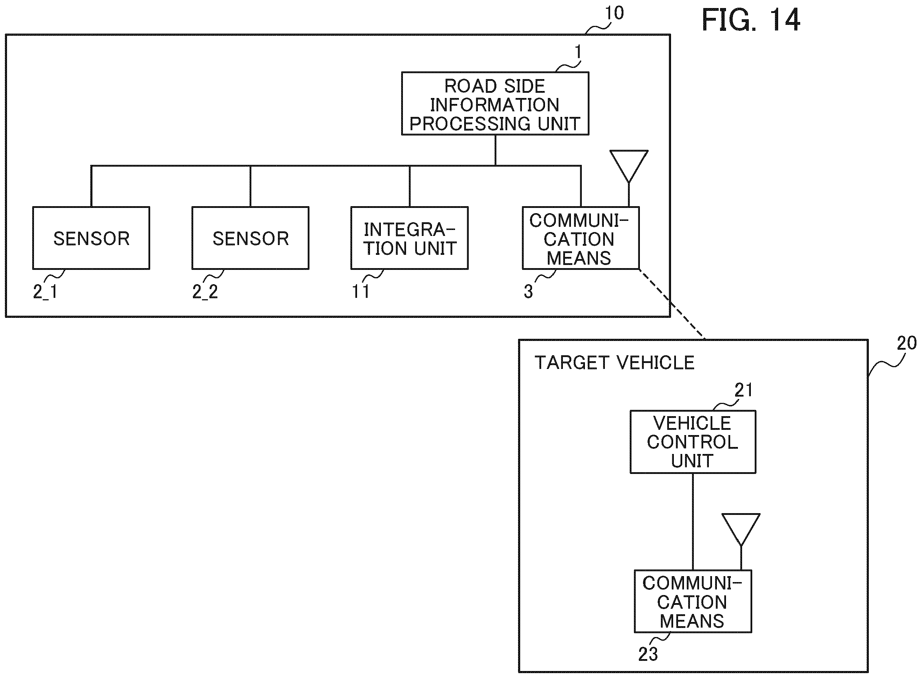

A seventh embodiment will be explained using FIG. 14. FIG. 14 is a block diagram showing a configuration example of a driving support system according to the seventh embodiment.

With the driving support system, at least two sensors and an integration unit which integrates information related to objects acquired from the sensors are arranged at the road side. The vehicle periphery information is calculated employing the information related to objects integrated by the integration unit, and the position of the target vehicle detected by the first position detection unit.

In the example shown in FIG. 14, although the two of the sensor 2_1 and sensor 2_2 are arranged at the road side, three or more may be arranged. For example, the sensor 2_1 and sensor 2_2 may be arranged by varying the angle so that the direction in which detecting information related to objects differ in the horizontal direction, and may be arranged by changing the height so that the height at which detecting information related to objects differ in the vertical direction.

The integration unit 11 integrates information related to objects sent from the sensor 2_1 and sensor 2_2. The communication means 3 sends the integrated information to the target vehicle. The target vehicle uses the information related to objects sent from the road side to calculate the vehicle periphery information, and using the calculated vehicle peripheral information, the vehicle control unit performs control of the vehicle.

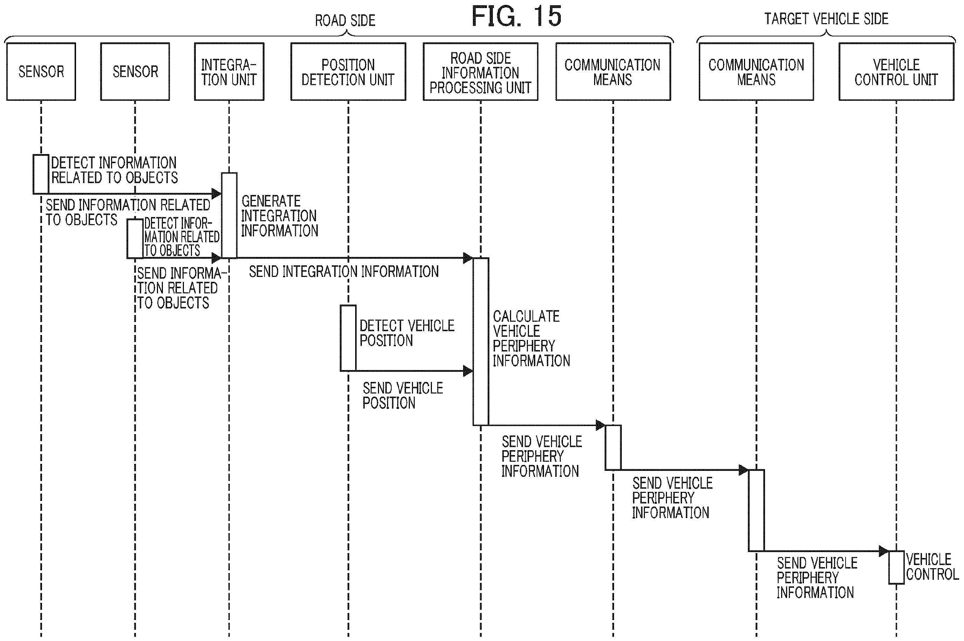

As an example, FIG. 15 shows the series of sequence of the present embodiment. It should be noted that, although a configuration in which the target vehicle does not include sensors and the vehicle position detection unit, it is not limited to this configuration.

Each sensor detects information related to objects, and sends the detected information related to objects to the integration unit. The integration unit integrates the information related to objects to generate integrated information, and sends the generated integrated information to the road side information processing unit. In addition, the position detection unit detects the position of the target vehicle, and sends the detected vehicle position to the road side information processing unit. The road side information processing unit calculates the vehicle periphery information based on the integrated information and the position of the target vehicle. The communication means of the road side sends the calculated vehicle periphery information to the target vehicle. The target vehicle performs control of the vehicle according to the vehicle periphery information sent from the road side.

By configuring in this way, the target vehicle, even without including the sensor by itself, can perform control of the vehicle according to the vehicle periphery information sent from the road side; therefore, it is possible to acquire the information required in travel, while suppressing an increase in cost.

### (Eighth Embodiment)

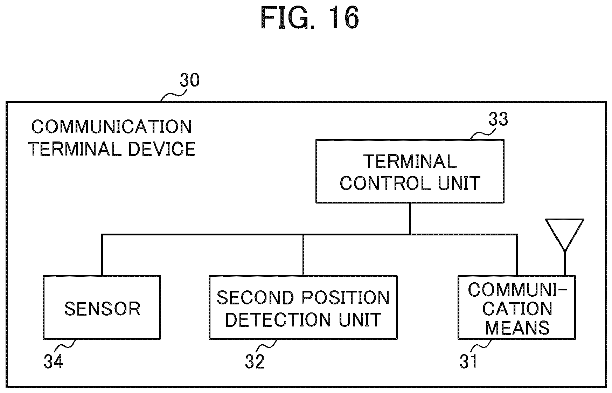

An eighth embodiment will be explained using FIG. 16. FIG. 16 is a block diagram showing a configuration example of a communication terminal device according to the eighth embodiment.

The driving support system may be a configuration including the communication terminal device 30. The communication terminal device 30 includes a communication means 31 which performs communication with the outside, a second position detection unit 32 which detects position, and a terminal control unit 33 which performs control of the overall terminal. The communication terminal device 30 sends position information detected by the second position detection unit 32 to the integration unit of the road side via the communication means 31. In addition, the communication terminal device 30 may be a configuration including a sensor 34 which detects information related to objects. The communication terminal device 30 sends information related to objects detected by the sensor 34 to the integration unit of the road side via the communication means 31.

The communication terminal device is a device capable of mobile communication, and is a portable telephone, smartphone, tablet or the like, for example.

By configuring in this way, the driving support system can perform driving support on the vehicle 20 which is the target, employing position information and information related to objects sent from the communication terminal device 30.

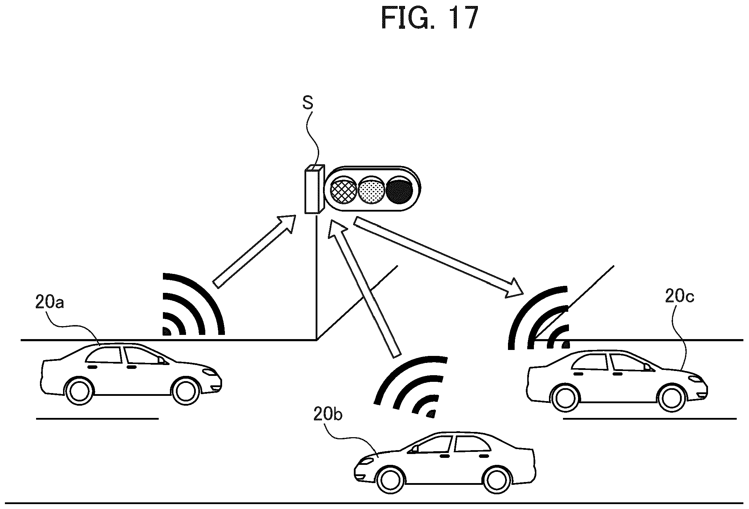

In addition, FIG. 17 is a schematic diagram of the driving support system. FIG. 17 shows a traffic signal S as an example on the road side. The vehicle 20a and vehicle 20b send information related to the vehicle to the traffic signal S which is the road side. The traffic signal S integrates the information related to vehicles sent from the vehicle 20a and vehicle 20b, and sends the integrated information to the vehicle 20c which is the target.

In addition, the sensor arranged at the road side may be a configuration which changes the region for acquiring the information related to vehicles, based on the position information of the target vehicle, so as to include this position information and the vicinity thereof. For example, in the case of the sensor being a camera, there is a method of changing the orientation of the camera. In addition, in the case of the sensor being radar, for example, there is a method of changing the irradiating direction of radar. According to this configuration, it is possible to acquire the optimal information related to vehicles, according to the position of the target vehicle.

In addition, the information integration unit may be a configuration which integrates information related to vehicles acquired from a plurality of sensors by way of processing using machine learning and artificial intelligence (AI), and sends the integrated information to the target vehicle. According to this configuration, the target vehicle can perform driving support using prediction information obtained from processing by machine learning or the like.

### EXPLANATION OF REFERENCE NUMERALS

1 road side information processing unit
2, 2_1, 2-1, 24, 34 sensor
3, 23, 31 communication means
10 road side
11 integration unit
20 vehicle, target vehicle
21 vehicle control unit
22 position detection unit
25 first setting unit
26 second setting unit
30 communication terminal device
32 second position detection unit
33 terminal control unit

## Claims

1. A driving support system which uses information related to objects acquired by a sensor disposed at a location other than a target vehicle, and position information of the target vehicle to calculate information related to objects in a periphery of the target vehicle, and provides a warning, position information or information related to objects to an autonomous driving control unit or a driver of the target vehicle, the driving support system comprising:
a road side information processing unit disposed at road side;
a vehicle control unit which is disposed at the target vehicle; and
a first position detection unit which is disposed on the target vehicle side or the road side, and detects position of the target vehicle,
wherein the road side information processing unit or the vehicle control unit calculates vehicle periphery information related to objects in the periphery of the target vehicle, using the information related to objects acquired from the sensor, and position of the target vehicle detected by the first position detection unit, and
wherein the road side information processing unit sends at least one of the information related to objects and the vehicle periphery information to the target vehicle.

2. The driving support system according to claim 1, further comprising:
a road side communication unit which is disposed at the road side; and
a vehicle communication unit which is disposed on the target vehicle side,
wherein the road side communication unit sends the vehicle periphery information to the vehicle communication unit.

3. The driving support system according to claim 1, further comprising:
a road side communication unit which is disposed at the road side; and
a vehicle communication unit which is disposed on the target vehicle side,
wherein the road side communication unit sends information related to objects acquired from the sensor to the vehicle communication unit, and
wherein the vehicle control unit calculates the vehicle periphery information, using the information related to objects received from the vehicle communication unit and position of the target vehicle detected by the first position detection unit.

4. The driving support system according to claim 1, wherein the road side information processing unit or the vehicle control unit calculates the vehicle periphery information by coordinate converting the information related to objects acquired from the sensor relative to the position of the target vehicle.

5. The driving support system according to claim 1, wherein the road side information processing unit or the vehicle control unit creates a space model from the information related to objects acquired from the sensor, and calculates the vehicle periphery information from the space model and the position of the target vehicle.

6. The driving support system according to any one of claims 1 to 5, wherein the first position detection unit is disposed at the vehicle side, and detects the position of the target vehicle using a positioning system which measures position using a signal from a satellite.

7. The driving support system according to any one of claims 1 to 5, wherein the first position detection unit estimates the position of the target vehicle using the information related to objects acquired from the sensor.

8. The driving support system according to any one of claims 1 to 7, wherein the position of the target vehicle is an absolute position or a relative position.

9. The driving support system according to any one of claims 1 to 8, further comprising the sensor disposed at a vehicle,
wherein an integration unit which integrates information related to objects acquired from a plurality of the sensors is disposed at the road side, and
wherein the vehicle periphery information is calculated using the information related to objects integrated by the integration unit, and the position of the target vehicle detected by the first position detection unit.

10. The driving support system according to any one of claims 1 to 8, further comprising the sensor disposed to at least one vehicle and to the road side,
wherein an integration unit which integrates information related to objects acquired from a plurality of the sensors is disposed at the road side, and
wherein the vehicle periphery information is calculated using information related to objects integrated by the integration unit, and the position of the target vehicle detected by the first position detection unit.

11. The driving support system according to claim 10, wherein the information related to objects acquired from the sensor disposed at the road side is information differing from the information related to objects acquired from the sensor disposed to the at least one vehicle.

12. The driving support system according to any one of claims 9 to 11, wherein the target vehicle is included in the vehicle.

13. The driving support system according to any one of claims 9 to 12, wherein the vehicle to which the sensor is disposed includes a first setting unit which sets whether or not to provide information related to objects acquired from its own sensor to the integration unit.

14. The driving support system according to any one of claims 1 to 8, wherein at least two of the sensors, and an integration unit which integrates information related to objects acquired from the sensors are disposed at the road side, and
wherein the vehicle periphery information is calculated using the information related to objects integrated by the integration unit, and the position of the target vehicle detected by the first position detection unit.

15. The driving support system according to any one of claims 1 to 14, wherein the target vehicle includes a second setting unit which sets whether or not to receive provision of information related to objects from outside.

16. The driving support system according to any one of claims 9 to 14, further comprising a communication terminal device which includes a second position detection unit that detects position,
wherein the communication terminal device sends position information detected by the second position detection unit to the integration unit.

17. The driving support system according to claim 16, wherein the communication terminal device includes the sensor, and sends information related to objects detected by this sensor to the integration unit.
